(19) Europäisches Patentamt / European Patent Office / Office européen des brevets

(11) **EP 3 636 942 B1**

(12) **FASCICULE DE BREVET EUROPEEN**

(45) Date de publication et mention
de la délivrance du brevet:
**11.08.2021 Bulletin 2021/32**

(51) Int Cl.:
***F16C 23/08*** *(2006.01)*          ***F16C 33/46*** *(2006.01)*
***F16C 33/48*** *(2006.01)*          ***F16C 33/49*** *(2006.01)*

(21) Numéro de dépôt: **19202720.9**

(22) Date de dépôt: **11.10.2019**

(54) **PROCÉDÉ DE FABRICATION D'UNE CAGE MONOBLOC MASSIVE DE ROULEMENT À ROTULE, CAGE ET ROULEMENT À ROTULE ASSOCIÉS**

HERSTELLUNGSVERFAHREN EINES MASSIVEN MONOBLOCKKÄFIGS EINES PENDELROLLENLAGERS, ENTSPRECHENDER KÄFIG UND ENTSPRECHENDES PENDELROLLENLAGER

METHOD FOR MANUFACTURING A MASSIVE SINGLE-PIECE CAGE FOR A SELF-ALIGNING BEARING, ASSOCIATED CAGE AND SELF-ALIGNING BEARING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2018 FR 1859439**

(43) Date de publication de la demande:
**15.04.2020 Bulletin 2020/16**

(73) Titulaire: **NTN-SNR ROULEMENTS**
**74000 Annecy (FR)**

(72) Inventeur: **RONZANI, Christian**
**74600 SEYNOD (FR)**

(74) Mandataire: **Alatis**
**3 rue Paul Escudier**
**75009 Paris (FR)**

(56) Documents cités:
**EP-A1- 2 535 610      GB-A- 1 562 660**
**US-A- 5 033 878**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE DE L'INVENTION**

L'invention se rapporte à un roulement à rotule à rouleaux pourvu d'au moins une cage. Elle a trait notamment à une cage monobloc massive pour un tel roulement à rotule. Dans le cadre de la présente demande, un roulement à rotule désigne un roulement dont la bague extérieure forme un chemin de roulement sphérique qui constitue une rotule dans laquelle un sous-ensemble constitué par des rouleaux, une ou deux cages et une ou deux bagues intérieures peut osciller. Ce type de roulement est utilisé notamment dans des applications où l'alignement des organes fixés à la ou aux bagues intérieures et à la bague extérieure est difficile à obtenir ou non constant.

**ÉTAT DE LA TECHNIQUE ANTÉRIEURE**

Parmi les cages monobloc de roulement à rotule, on peut faire une distinction entre les cages en tôle, obtenue par des opérations d'emboutissage et de découpe, et les cages massives, obtenues par usinage d'une ébauche. Les cages monobloc en tôle se caractérisent par une épaisseur relativement constante, qui ne varie en pratique pas de plus de 20%, alors que les cages monobloc massives peuvent présenter des épaisseurs variant davantage. Les procédés de fabrication des cages monobloc en tôle demandent moins d'investissement et permettent généralement d'atteindre des cadences de production supérieures aux procédés de fabrication des cages monobloc massives. Les cages métalliques monobloc massives sont plus particulièrement destinées à des applications exigeantes en termes d'endurance et de longévité, dans des conditions alliant vitesse et température élevées, chocs et pollution, telles que l'aéronautique.

Une cage métallique monobloc massive de roulement à rotule connue comporte au moins un anneau définissant un axe de révolution de la cage et des entretoises distribuées à distance les unes des autres à la périphérie de l'anneau et s'étendant chacune depuis l'anneau dans une direction contenue dans un plan axial pour délimiter entre elles des alvéoles de la cage pour loger des rouleaux du roulement à rotule, chaque alvéole étant symétrique par rapport à un plan de symétrie de l'alvéole contenant l'axe de révolution de la cage, chacune des entretoises comportant deux parois latérales d'alvéole opposées, chacune des parois latérales d'alvéole étant associée à l'une des alvéoles et étant constituée par une surface réglée ayant en tout point une génératrice droite perpendiculaire à un plan de référence de l'alvéole associée, le plan de référence étant perpendiculaire au plan de symétrie de l'alvéole associée, et faisant un angle prédéterminé constant avec l'axe de révolution de la cage. En pratique, les alvéoles sont usinées par fraisage, la fraise tournant autour d'un axe de travail parallèle aux génératrices des surfaces cylindriques constituant les parois latérales d'alvéole des entretoises. Une telle cage est intégrée à un roulement à rotule à rouleaux comportant en outre une bague extérieure formant un chemin de roulement sphérique concave, au moins une bague intérieure formant un chemin de roulement intérieur qui, dans une position de référence du roulement à rotule, est situé en regard du chemin de roulement sphérique concave de la bague extérieure, et des rouleaux logés dans les alvéoles de la cage et aptes à rouler sur le chemin de roulement sphérique concave de la bague extérieure et le chemin de roulement intérieur de la bague intérieure. Il est à souligner que les alvéoles de la cage ne sont pas enveloppantes, au sens où la section de l'alvéole est constante pour tout plan parallèle au plan de référence. Les rouleaux sont dits « en tonneaux » : ils présentent une surface extérieure de roulement constituée par une surface de révolution générée par la rotation d'une méridienne en arc de cercle autour d'un axe de symétrie de révolution situé entre la méridienne en arc de cercle et le centre de courbure de la méridienne en arc de cercle. Le rayon de courbure des faces cylindriques est supérieur au rayon de courbure de la méridienne en arc de cercle, avec une différence qui en pratique est de l'ordre de 1,5 mm. De ce fait, chaque rouleau présente à chaque instant au plus un point de contact (ou une zone de contact quasi-ponctuelle) unique avec la paroi latérale d'alvéole d'une entretoise donnée, qui statistiquement se trouve le plus souvent à mi-hauteur du rouleau, au niveau de son plus grand diamètre.

On peut rencontrer pour ce type de roulement des traces d'usure au niveau du grand cercle médian des rouleaux, qui peuvent à terme engendrer à leur tour des marques d'usure sur les chemins de roulement de la bague intérieure et de la bague extérieure. Ces usures peuvent entrainer des microécaillages sur le rouleau et sur les pistes.

Dans le document GB1562660A est décrit un procédé de fabrication selon le préambule de la revendication 1 d'une cage monobloc massive en acier pour un roulement à rotule à partir d'une pièce d'ébauche annulaire définissant un axe de révolution, selon lequel :

-  on obtient une pièce semi-finie par usinage de la pièce d'ébauche à l'aide successivement d'une fraise puis d'une broche, de manière à former dans la pièce semi-finie des alvéoles séparées deux à deux par des entretoises distribuées à distance les unes des autres à la périphérie d'un anneau d'extrémité de la pièce semi-finie et s'étendant chacune depuis l'anneau d'extrémité dans une direction contenue dans un plan axial, chaque alvéole étant symétrique par rapport à un plan de symétrie de l'alvéole, contenant l'axe de révolution, chacune des entretoises comportant deux parois latérales d'alvéole opposées, chacune des parois latérales d'alvéole étant associée à l'une des alvéoles et étant constituée par une surface réglée ayant en tout point une génératrice droite parallèle à une direction de pénétration de l'outil d'usinage perpendiculaire à un plan de référence de l'alvéole associée, le plan de référence étant perpendiculaire au plan de symétrie de l'alvéole associée, et faisant un angle prédéterminé avec l'axe de révolution de la cage, chacune des parois latérales d'alvéole comportant deux facettes de guidage planes ou concaves s'étendant l'une d'un côté d'un plan médian de l'alvéole associée et l'autre d'un côté opposé du plan médian de l'alvéole, le plan médian étant perpendiculaire au plan de symétrie de l'alvéole associée et au plan de référence de l'alvéole associée, chacune des entretoises de la pièce semi finie comportant une face radiale extérieure tournée radialement à l'opposé de l'axe de révolution de la cage, puis

- on procède à une finition de la cage à partir de la pièce semi-finie, incluant la formation, sur chaque entretoise, de languettes en saillie vers les alvéoles adjacentes, qui implique une nouvelle opération d'usinage.

Les deux facettes de guidage de chaque alvéole sont adaptées pour correspondre au profil sphérique des rouleaux en tonneaux qui sont logés dans les alvéoles, de manière que la forme de chaque alvéole se conforme substantiellement à la forme de la section axiale des rouleaux, et que les rouleaux puissent être logés dans les alvéoles avec un jeu suffisant pour permettre la rotation des rouleaux. Le contact entre rouleaux et facettes de guidage suit donc potentiellement une génératrice en arc de cercle, ce qui est susceptible d'engendrer des frottements importants.

On connaît par ailleurs pour des cages en tôle dont les entretoises sont pourvues de languettes de guidage et de retenue des rouleaux, faisant saillie vers l'intérieur des alvéoles. Chaque alvéole est ainsi équipée de deux fois deux languettes de guidage et de retenue, disposées de part et d'autre du grand cercle médian du rouleau. Cette solution de guidage n'est toutefois pas aisément transposable à une cage massive. De plus, les languettes de guidage limitent considérablement les zones de la surface de roulement du rouleau susceptible d'être au contact de la cage.

**EXPOSÉ DE L'INVENTION**

L'invention vise à remédier aux inconvénients de l'état de la technique et à proposer une cage massive monobloc et un roulement ne présentant pas de risque d'usure prématurée des rouleaux par la cage.

Pour ce faire est proposé, selon un premier aspect de l'invention, un procédé de fabrication d'une cage monobloc massive en matériau métallique pour un roulement à rotule à partir d'une pièce d'ébauche annulaire définissant un axe de révolution, selon lequel :

- on obtient une pièce semi-finie par usinage de la pièce d'ébauche à l'aide d'au moins un outil d'usinage, de manière à former dans la pièce semi-finie des alvéoles séparées deux à deux par des entretoises distribuées à distance les unes des autres à la périphérie d'un anneau d'extrémité de la pièce semi-finie et s'étendant chacune depuis l'anneau d'extrémité dans une direction contenue dans un plan axial, chaque alvéole étant symétrique par rapport à un plan de symétrie de l'alvéole, contenant l'axe de révolution, chacune des entretoises comportant deux parois latérales d'alvéole opposées, chacune des parois latérales d'alvéole étant associée à l'une des alvéoles et étant constituée par une surface réglée ayant en tout point une génératrice droite parallèle à une direction de pénétration de l'outil d'usinage et perpendiculaire à un plan de référence de l'alvéole associée, le plan de référence étant perpendiculaire au plan de symétrie de l'alvéole associée, et faisant un angle prédéterminé avec l'axe de révolution de la cage, chacune des parois latérales d'alvéole comportant deux facettes de guidage planes ou concaves s'étendant l'une d'un côté d'un plan médian de l'alvéole associée et l'autre d'un côté opposé du plan médian de l'alvéole, le plan médian étant perpendiculaire au plan de symétrie de l'alvéole associée et au plan de référence de l'alvéole associée, chacune des entretoises de la pièce semi finie comportant une face radiale extérieure tournée radialement à l'opposé de l'axe de révolution de la cage, puis

- on procède à une finition de la cage à partir de la pièce semi-finie, incluant la formation sur chaque entretoise de languettes en saillie vers les alvéoles adjacentes et une rectification des facettes de guidage ;

Selon l'invention, chaque paroi latérale d'alvéole de la pièce semi-finie comporte une gorge située entre les deux facettes de guidage, en retrait par rapport aux deux facettes de guidage, les deux facettes de guidage de chaque paroi latérale d'alvéole après finition de la cage étant conformées de façon qu'il existe au moins un cercle positionné dans un plan de coupe parallèle au plan de référence de l'alvéole associée qui est tangent simultanément en un point unique avec chacune des deux facettes de guidage de la paroi latérale d'alvéole, le rayon du cercle étant inférieur au rayon de courbure mesuré en tout point de chacune des deux facettes de guidage dans le plan de coupe.

Le rayon du cercle est une caractéristique de la cage et correspond au rayon de courbure de la méridienne en arc de cercle d'un rouleau en tonneau destiné à être logé dans l'alvéole. En garantissant que cet arc de cercle soit tangent simultanément avec les deux facettes de guidage d'une même paroi latérale d'alvéole, on assure pour chaque rouleau deux points de contact avec une entretoise de l'alvéole associée, lorsque l'axe de rotation du rouleau est parallèle au plan de référence de l'alvéole, qu'il soit ou non parallèle avec le plan de symétrie de l'alvéole. Les points de contact sont par construction à distance du plan médian de l'alvéole, de sorte que le plus grand périmètre du rouleau, qui est destiné à être positionné à proximité directe du plan médian, n'est pas sollicité par la cage.

L'angle prédéterminé entre chaque plan de référence d'une alvéole et l'axe de révolution de la cage a la même valeur pour toutes les alvéoles, et vaut typiquement entre 10° et 25°, et plus spécifiquement entre 15° et 20°.

La cage peut être réalisée notamment en acier, en bronze ou en un alliage cuivreux, le cas échéant avec un revêtement d'argent.

La gorge constitue un renfoncement facilitant l'usinage et permettant en outre, lors du fonctionnement du roulement, de loger une réserve de lubrifiant, et d'assurer davantage l'absence de contact avec la partie médiane du rouleau.

L'ordre des opérations de finition peut être quelconque, la formation des entretoises précédant ou succédant à la rectification des facettes de guidage.

Pour former les languettes, on peut notamment déformer localement la face radiale extérieure de chaque entretoise. Cette déformation locale peut être réalisée de manière rapide et très simple, par exemple à l'aide d'une molette, le cas échéant après que les facettes de guidage ont été rectifiées, dans la mesure où elle ne se propage pas aux facettes de guidage. Ceci permet, pour la rectification, de travailler sur la surface de la pièce semi-finie, qui est une surface réglée.

Suivant un mode de réalisation, que l'usinage de la pièce d'ébauche à l'aide d'au moins un outil d'usinage comporte au moins un fraisage à l'aide d'une fraise. Suivant un mode de réalisation, l'usinage de la pièce d'ébauche à l'aide d'au moins un outil d'usinage comporte au moins un brochage à l'aide d'une broche.

De préférence, on fait en sorte que pour chaque paroi latérale d'alvéole, les deux facettes de guidage soient symétriques l'une de l'autre par rapport au plan médian de l'alvéole associée.

Suivant un mode de réalisation, chaque alvéole comporte une paroi d'extrémité formée par une face de l'anneau, qui est une surface réglée ayant en tout point une génératrice droite perpendiculaire au plan de référence de l'alvéole. Dans le cas d'une cage métallique, on peut ainsi fabriquer l'alvéole par fraisage en utilisant une même fraise pour usiner les parois latérales d'alvéole et la face d'extrémité, ou un brochage.

La cage peut avoir une ou plusieurs des caractéristiques géométriques suivantes :

- Chacune des facettes de guidage s'étend, dans une direction parallèle au plan de symétrie de l'alvéole associée et au plan de référence de l'alvéole associée, sur une distance supérieure à 40% de la distance entre l'anneau et le plan médian de l'alvéole associée. Du fait de cette dimension relativement importante, les facettes de guidages sont aptes à guider le rouleau logé dans l'alvéole quelle que soit l'orientation du rouleau.

- Les entretoises ont une épaisseur radiale, mesurée dans un plan perpendiculaire à l'axe de révolution de la cage, qui varie en fonction de la distance à l'anneau, en passant au moins par un minimum et un maximum supérieur à 1,2 fois, et de préférence à 1,5 fois le minimum. Cette variation de l'épaisseur radiale de la cage permet d'assurer qu'une partie de chaque entretoise et de chaque paroi latérale d'alvéole se situe au-dessus et une autre partie en dessous du plan de référence de l'alvéole associée, ce plan de référence ayant vocation, dans une position nominale de référence du roulement, à contenir l'axe de rotation du rouleau logé dans l'alvéole.

- Chacune des entretoises présente un plan de symétrie d'entretoise contenant l'axe de révolution de la cage, et a une épaisseur, mesurée dans une direction perpendiculaire au plan de symétrie d'entretoise, qui varie en fonction de la distance à l'anneau et de la distance à l'axe de révolution de la cage, en passant par un minimum dans une zone médiane contenant l'intersection entre le plan de symétrie d'entretoise et le plan médian de chacune des alvéoles adjacentes à l'entretoise.

- La face radiale extérieure de chacune des entretoises comporte une première portion tangente à une portion cylindrique d'une enveloppe géométrique extérieure de la cage et une deuxième portion tangente à une portion conique de l'enveloppe géométrique extérieure de la cage, l'enveloppe géométrique extérieure de la cage étant une surface de révolution autour de l'axe de révolution de la cage, la première portion ayant de préférence une dimension axiale mesurée parallèlement à l'axe de révolution de la cage supérieure à un tiers de la dimension axiale des entretoises mesurée parallèlement à l'axe de révolution de la cage, la deuxième portion ayant de préférence une dimension axiale mesurée parallèlement à l'axe de révolution de la cage supérieure à un tiers de la dimension axiale des entretoises mesurée parallèlement à l'axe de révolution de la cage. Ce profil extérieur permet une bonne insertion de la cage dans la bague extérieure du roulement auquel elle est destinée.

- Chacune des entretoises comporte une face radiale intérieure tournée radialement vers l'axe de révolution de la cage, et tangente à une portion conique d'une enveloppe géométrique intérieure de la cage, l'enveloppe géométrique intérieure de la cage étant une surface de révolution autour de l'axe de révolution de la cage, la face radiale intérieure ayant une dimension axiale mesurée parallèlement à l'axe de révolution de la cage supérieure à deux tiers, et de préférence supérieure à quatre cinquième de la dimension axiale des entretoises mesurée parallèlement à l'axe de révolution de la cage. L'angle au sommet de cette portion conique est de préférence égal au double de l'angle prédéterminé entre le plan de référence de chaque alvéole et l'axe de révolution de la cage.

- L'anneau présente une portée cylindrique tournée radialement vers l'intérieur. Cette portée cylindrique permet de centrer la cage sur la bague intérieure du roulement à rotule auquel la cage est destinée, et fait de préférence l'objet d'une rectification, de préférence après une étape de finition des alvéoles, à la fin d'une phase de finition de la cage à partir de la pièce semi-finie.

- Le point unique est positionné à une distance du plan médian de l'alvéole qui est comprise entre 30% et 70% de la distance L entre le plan médian de l'alvéole et l'anneau.

Suivant un mode de réalisation préféré, la cage comporte un anneau supplémentaire, les entretoises constituant des pontets s'étendant de l'anneau à l'anneau supplémentaire, l'anneau et l'anneau supplémentaire ayant des diamètres extérieurs différents, chaque alvéole comportant une paroi transversale supplémentaire formée par une face de l'anneau supplémentaire, qui est une surface réglée ayant en tout point une génératrice droite perpendiculaire au plan de référence de l'alvéole. De préférence, l'anneau supplémentaire présente une portée cylindrique supplémentaire tournée radialement vers l'intérieur.

Alternativement, l'invention est également applicable à une cage dite en peigne, ne comportant pas d'anneau supplémentaire.

Suivant un mode de réalisation, chacune des facettes de guidage est plane.

Suivant un autre mode de réalisation, chaque facette de guidage de chaque alvéole présente, dans le plan de référence de l'alvéole, une directrice en arc de cercle ayant un centre de courbure positionné d'un côté du plan médian de l'alvéole opposé à la facette de guidage.

Suivant un autre aspect de l'invention, celle-ci a trait à une cage obtenue par le procédé de fabrication tel que décrit précédemment, dans l'une quelconque de ses variantes.

Suivant un autre aspect de l'invention, celle-ci a trait à un roulement à rotule comportant une bague extérieure formant un chemin de roulement sphérique concave, au moins une bague intérieure formant au moins un chemin de roulement intérieur qui, dans une position de référence du roulement à rotule, est situé en regard du chemin de roulement sphérique concave de la bague extérieure, des rouleaux aptes à rouler sur le chemin de roulement sphérique concave de la bague extérieure et le chemin de roulement intérieur de la bague intérieure, et présentant une surface extérieure de roulement constituée par une surface de révolution générée par la rotation d'une méridienne en arc de cercle autour d'un axe de symétrie de révolution situé entre la méridienne en arc de cercle et le centre de courbure de la méridienne en arc de cercle, le roulement comportant au moins une cage monobloc massive obtenue par le procédé de fabrication tel que décrit précédemment, dans l'une quelconque de ses variantes, chaque alvéole logeant un rouleau parmi les rouleaux, chaque facette de guidage ayant un rayon de courbure supérieur au rayon de courbure de la méridienne en arc de cercle dudit rouleau.

**BRÈVE DESCRIPTION DES FIGURES**

D'autres caractéristiques et avantages de l'invention ressortiront à la lecture de la description qui suit, en référence aux figures annexées, qui illustrent :

- la figure 1, une vue d'un roulement à rotule sur rouleaux suivant un mode de réalisation de l'invention, en coupe suivant un plan de coupe passant par un axe de révolution d'une cage du roulement à rotule, le plan de coupe étant un plan de symétrie de la cage et un plan de symétrie d'une entretoise de la cage ;

- la figure 2, une vue du roulement à rotule sur rouleaux de la figure 1, en coupe suivant un plan de coupe passant par l'axe de révolution de la cage du roulement à rotule, le plan de coupe étant un plan de symétrie de la cage et un plan de symétrie d'une alvéole de la cage ;

- la figure 3, une vue isométrique de la cage du roulement à rotule sur rouleaux de la figure 1 ;

- la figure 4, une vue de côté d'un sous-ensemble du roulement à rotule de la figure 1, incluant la cage et les rouleaux ;

- la figure 5, une coupe d'un détail du sous-ensemble de la figure 4, suivant un plan de coupe A-A de la figure 4 ;

- la figure 6, une coupe d'un détail du sous-ensemble de la figure 4, suivant un plan de coupe B-B de la figure 3 ;

- la figure 7, une coupe d'un détail d'une alvéole et d'un rouleau suivant un deuxième mode de réalisation de l'invention, dans un plan de coupe correspondant au plan de coupe A-A de la figure 4 ;

- la figure 8, une coupe de l'alvéole et du rouleau de la figure 7, suivant un plan de coupe correspondant au plan de coupe B-B de la figure 4.

Pour plus de clarté, les éléments identiques ou similaires sont repérés par des signes de référence identiques sur l'ensemble des figures.

## DESCRIPTION DÉTAILLÉE DE MODES DE RÉALISATION

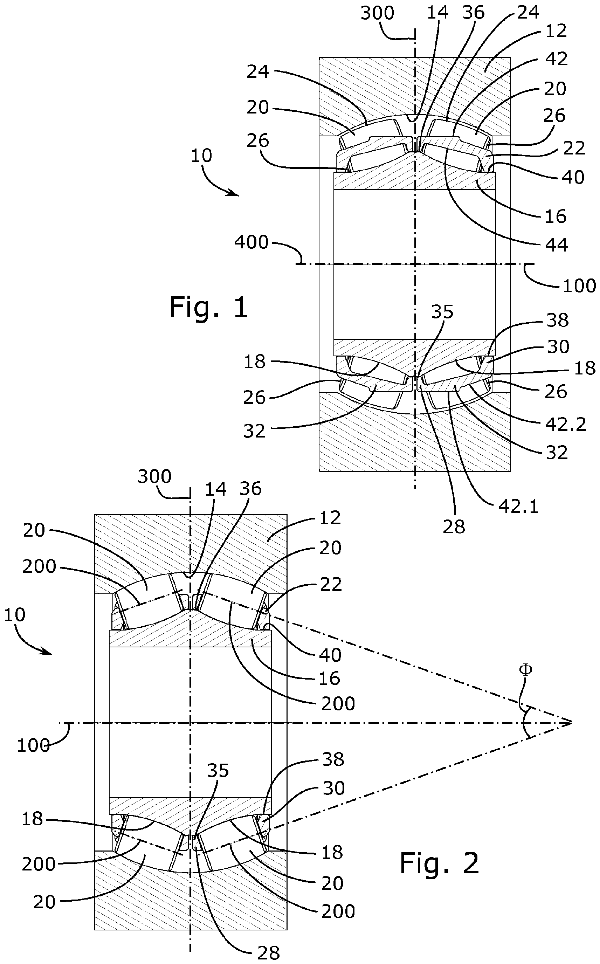

Sur les figures 1 et 2 est illustré un roulement à rotule 10, comportant une bague extérieure 12 formant un chemin de roulement sphérique concave 14, une bague intérieure 16 formant deux chemins de roulement intérieurs 18 qui, dans la position de référence du roulement à rotule 10 illustrée sur les figures 1 et 2, sont situés chacun en regard d'une portion du chemin de roulement sphérique concave 14 de la bague extérieure 12, des rouleaux 20 distribués en deux rangées et aptes à rouler chacun sur le chemin de roulement sphérique concave 14 de la bague extérieure 12 et sur l'un des deux chemins de roulement intérieurs 18 de la bague intérieure 16, et, pour chaque rangée de rouleaux 20, une cage métallique monobloc massive 22 de guidage des rouleaux 20 de la rangée associée. Les chemins de roulement 18 de la bague intérieure 16 définissent un axe de symétrie de révolution commun 100 sur lequel est positionné le centre de courbure du chemin de roulement extérieur 14.

Les rouleaux 20 sont des rouleaux en tonneau, tous identiques, qui présentent une surface extérieure de roulement 24 constituée par une surface de révolution générée par la rotation d'une méridienne en arc de cercle autour d'un axe de symétrie de révolution 200 situé entre la méridienne en arc de cercle et le centre de courbure de la méridienne en arc de cercle. L'axe de symétrie de révolution 200 est destiné à constituer l'axe de rotation des rouleaux 20 roulant sur les chemins de roulement 14, 18. Les faces d'extrémité 26 des rouleaux 20 peuvent être planes, bombées ou en creux.

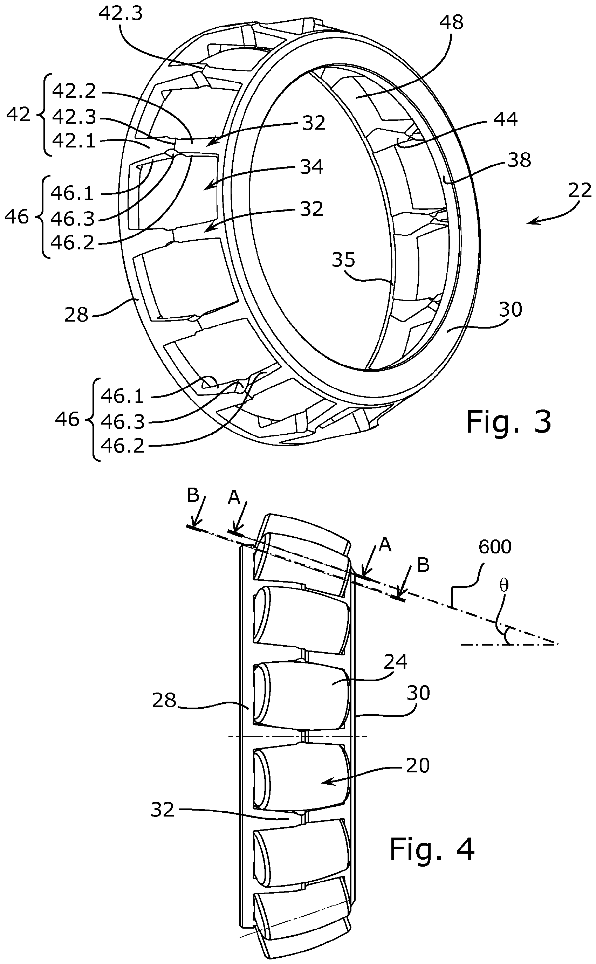

Dans la position de référence des figures 1 et 2, le roulement à rotule 10 présente un plan de symétrie 300 perpendiculaire à l'axe de symétrie de révolution 100 de la bague intérieure 16, ce qui traduit le fait que les deux cages 22 sont en miroir l'une de l'autre, et l'on se contentera dans la suite de la description de l'une d'entre elles. Il s'agit d'une cage métallique monobloc massive 22 qui, comme illustré sur la figure 3, comportant un grand anneau 28, un petit anneau 30, et des entretoises 32 constituant des pontets entre les anneaux 28, 30 et divisant l'espace entre les deux anneaux 28, 30 en autant d'alvéoles 34 de logement des rouleaux 20 de la rangée de rouleaux associée.

Le grand anneau 28 forme une portée cylindrique de guidage 35 venant en regard d'une portée cylindrique 36 correspondante formée sur la bague intérieure 16. Le petit anneau 30 forme une portée cylindrique de guidage 38 venant également en regard d'une portée cylindrique 40 correspondante formée sur la bague intérieure 16. La cage 22 est ainsi apte à tourner autour de l'axe de symétrie de révolution 100 des chemins de roulement 18 de la bague intérieure 16, qui est donc confondu avec un axe de révolution 400 de la cage 22.

L'ensemble des entretoises 32 de la cage est de préférence invariant par rotation d'un angle de $2\pi/_N$ autour de l'axe de révolution 400 de la cage 22, N étant le nombre de rouleaux 20 par rangée, ce qui revient à dire que toutes les entretoises 32, et par conséquent toutes les alvéoles 34, sont identiques.

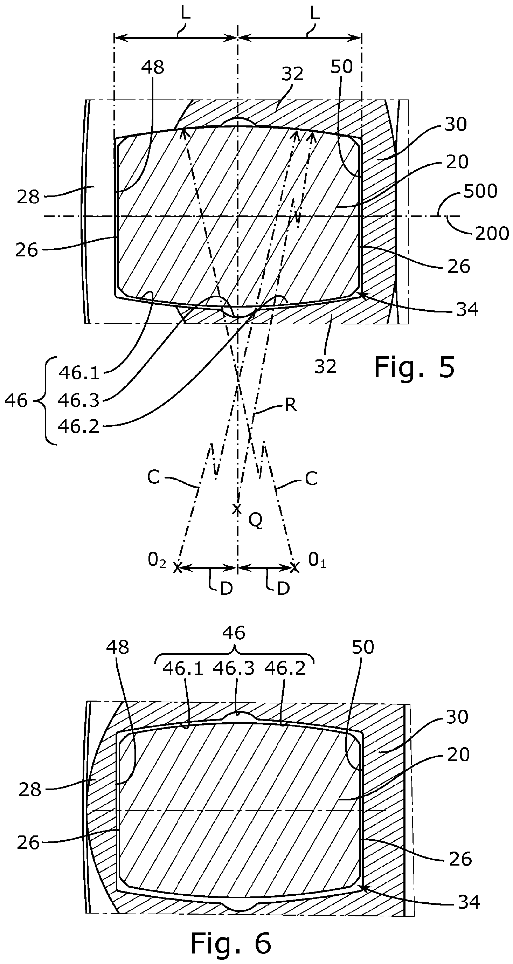

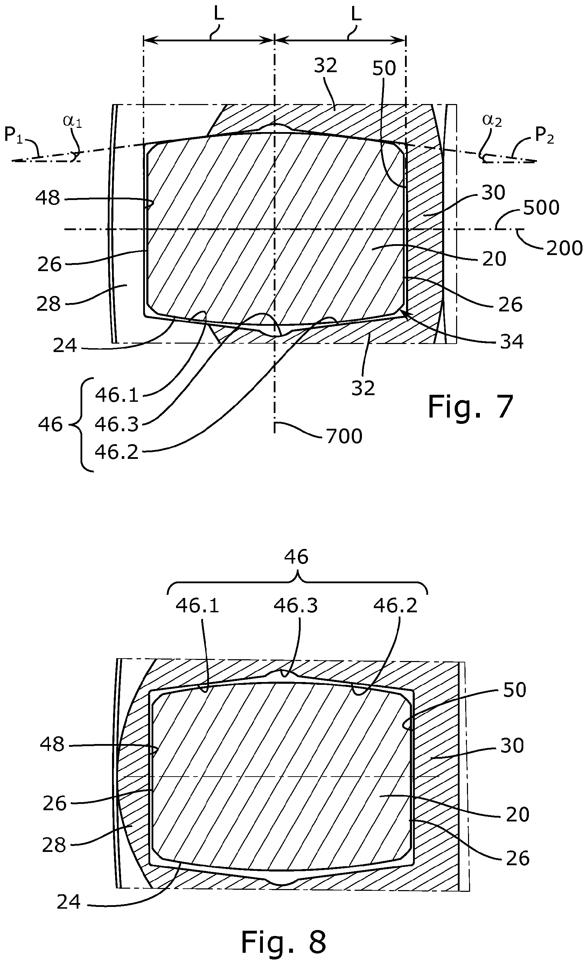

Le plan de coupe de la figure 1 coupe quatre des entretoises 32 et constitue pour ces entretoises 32, et pour l'ensemble des entretoises 32, un plan de symétrie. Le plan de coupe de la figure 2 passe par les axes de rotation 200 de quatre des rouleaux 20, et constitue un plan de symétrie, noté 500 sur la figure 5 et 7, pour les alvéoles 34 de logement de ces rouleaux 20, et plus généralement pour l'ensemble des entretoises 32 définissant les alvéoles 34.

Chaque entretoise 32 comporte une face radiale extérieure 42 tournée à l'opposé de l'axe de révolution 400 de la cage 22, une face radiale intérieure 44 tournée vers l'axe de révolution 400 de la cage 22 et deux parois latérales 46 d'alvéole opposées.

Comme illustré sur la figure 3, la face radiale extérieure 42 de chaque entretoise 32 comporte une première portion 42.1 tangente à une première portion cylindrique d'une enveloppe géométrique extérieure de la cage 22 et une deuxième portion 42.2 tangente à une deuxième portion conique de l'enveloppe géométrique extérieure de la cage 22, l'enveloppe géométrique extérieure de la cage étant une surface de révolution autour de l'axe de révolution 400 de la cage 22. La première portion 42.1 de la face radiale extérieure 42 a une dimension axiale mesurée parallèlement à l'axe de révolution 400 de la cage 22, qui est supérieure à un tiers de la dimension axiale des entretoises 32 mesurée parallèlement à l'axe de révolution 400 de la cage 22. De façon similaire, la deuxième portion 42.2 de la face radiale extérieure 42 a une dimension axiale mesurée parallèlement à l'axe de révolution 400 de la cage 22, qui est supérieure à un tiers de la dimension axiale des entretoises 32 mesurée parallèlement à l'axe de révolution 400 de la cage 22. La face radiale extérieure forme un décrochement entre la première portion et la deuxième portion. Une partie au moins de la première portion 42.1 se situe radialement à l'extérieur du cône primitif décrit par les axes de rotation 200 des rouleaux 20 dans la position de référence des figures 1 et 2.

Comme illustré sur la figure 1, la face radiale intérieure 44 de chaque entretoise 32 est tangente à une portion conique d'une enveloppe géométrique intérieure de la cage, l'enveloppe géométrique intérieure de la cage 22 étant une surface de révolution autour de l'axe de révolution 400 de la cage 22, la face radiale intérieure 44 ayant une dimension axiale mesurée parallèlement à l'axe de révolution 400 de la cage 22, qui est supérieure à deux tiers, et de préférence supérieure à quatre cinquième de la dimension axiale des entretoises **32** mesurée parallèlement à l'axe de révolution **400** de la cage **22.** La face radiale intérieure **44** est positionnée tout entière à l'intérieur du cône primitif décrit par les axes de rotation **200** des rouleaux **20** dans la position de référence des figures **1** et **2.**

Comme illustré sur la figure **1,** chaque entretoise **32** a une épaisseur radiale, mesurée entre la face radiale extérieure **42** et la face radiale intérieure **44,** dans un plan perpendiculaire à l'axe de révolution **400** de la cage **22,** qui varie en fonction de la distance au grand anneau **30,** en passant au moins par un minimum au niveau de la liaison entre l'entretoise **32** et le grand anneau **28** et un maximum situé dans un plan radial coupant la première portion **42.1** de la face radiale extérieure **42** à son extrémité la plus éloignée du grand anneau **28.** Le maximum est supérieur à 1,2 fois, et de préférence à 1,5 fois le minimum. Cette disposition permet aux entretoises **32** de s'étendre radialement partiellement à l'intérieur et partiellement à l'extérieur du cône primitif décrit par les axes de rotation **200** des rouleaux **20** dans la position de référence des figures **1** et **2.** La pointe **42.3** située au niveau de la rupture de pente entre la première portion **42.1** et la deuxième portion **42.2** de la face radiale extérieure **42** est de préférence évasée pour faire une saillie (non visible sur les figures) très légère à l'intérieur vers les deux alvéoles adjacentes **34,** afin de créer deux languettes de retenue des rouleaux **20** logés dans ces alvéoles **34,** se faisant face de part et d'autre de l'alvéole **34.**

Chacune des parois latérales **46** d'alvéole est associée à l'une des alvéoles **34** dont elle forme une paroi et est constituée par une surface réglée ayant en tout point une génératrice droite perpendiculaire à un plan de référence **600** de l'alvéole **34** associée, qui constitue le plan de coupe de la figure **5.** Le plan de référence **600** est perpendiculaire au plan de symétrie **500** de l'alvéole associée, et fait un angle θ prédéterminé avec l'axe de révolution de la cage, qui est constant en ce sens qu'il est de valeur identique pour toutes les alvéoles. Cet angle a vocation à être la moitié de l'angle au sommet φ du cône primitif des rouleaux **20** et, dans la position de référence des figures **1** et **2,** le plan de référence **600** a vocation à contenir l'axe de rotation **200** du rouleau **20** logé dans l'alvéole **34** concernée.

Suivant le premier mode de réalisation de l'invention, et comme illustré sur les figures **3** à **6,** chaque paroi latérale **46** d'alvéole comporte deux facettes de guidage **46.1, 46.2** concaves s'étendant de part et d'autre d'un plan médian **700** de l'alvéole associée, le plan médian **700** étant perpendiculaire au plan de symétrie **500** de l'alvéole **34** associée et au plan de référence **600** de l'alvéole **34** associée. Chaque facette de guidage **46.1, 46.2** possède, en tout point dans tout plan de coupe parallèle au plan de référence de l'alvéole associée (et par exemple dans les plans de coupe **A-A** et **B-B** des figures **5** et **6),** un rayon de courbure C constant. En d'autres termes, chaque facette de guidage **46.1, 46.2** est une portion d'un cylindre à base circulaire d'axe perpendiculaire au plan de référence **600.** De façon remarquable, le rayon de courbure C de chaque facette de guidage **46.1, 46.2,** dans un plan de coupe quelconque parallèle au plan de référence **600** de l'alvéole **34,** est supérieur au rayon de courbure R de la méridienne en arc de cercle du rouleau logé dans l'alvéole, et le centre de courbure $O_1$, $O_2$ de chaque facette **46.1, 46.2,** dans le même plan de coupe, est situé d'un côté du plan médian **700** de l'alvéole qui est opposé à la facette de guidage **46.1, 46.2** correspondante.

Avec une telle disposition, un cercle de rayon égal au rayon de courbure **R** de la méridienne en arc de cercle du rouleau **20** et positionné dans le plan de référence **600** d'une alvéole **34** avec son centre **Q** dans le plan médian **700** de l'alvéole est tangent en un point unique avec chacune des deux facettes de guidage **46.1, 46.2** de la paroi latérale **46** d'alvéole.

Chaque alvéole comporte en outre une paroi d'extrémité **48** formée par le grand anneau **28** et une paroi d'extrémité **50** opposée formée par le petit anneau **30.** Les parois d'extrémité peuvent être planes, bombées ou en creux. Elles sont constituées, comme les parois latérales **46** d'alvéole, par des surfaces réglées dont les génératrices sont en tout point perpendiculaires au plan de référence **600** de l'alvéole **46** considérée.

Si l'on souhaite que le point unique de contact entre le rouleau **20** et chaque facette de guidage **46.1, 46.2** se situe à mi-distance entre le plan médian **700** et la paroi d'extrémité **48, 50** correspondante de l'alvéole, il suffit de positionner le centre de courbure $O_1$ et le centre de courbure $O_2$ à une distance **D** du plan médian **700** telle que, en notant **L** la distance entre le médian **700** et la paroi d'extrémité **48** de l'alvéole :

$$D = \frac{C - R}{R} \cdot \frac{L}{2}$$

Suivant un deuxième mode de réalisation illustré sur les figures **7** à **8,** chaque facette de guidage **46.1, 46.2** est plane, et le plan $P_1$, $P_2$ de chaque facette de guidage **46.1, 46.2** fait avec le plan de symétrie **500** de l'alvéole **34** associée un angle $\alpha_1$, $\alpha_2$ non nul, les plans $P_1$, $P_2$ des deux facettes de guidage **46.1, 46.2** d'une même paroi latérale **46** d'alvéole de l'alvéole **34** étant en position miroir l'un de l'autre par rapport au plan médian **700** de l'alvéole **34** en question, de sorte que $\alpha_1$, $\alpha_2$ ont la même valeur absolue.

Avec une telle disposition, un cercle de rayon égal au rayon de courbure R de la méridienne en arc de cercle du rouleau **20** et positionné dans le plan de référence **500** d'une alvéole **34** avec son centre dans le plan médian **700** de l'alvéole **34** est tangent en un point unique avec chacune des deux facettes de guidage **46.1, 46.2** de la paroi latérale **46** d'alvéole. Si l'on souhaite que ce point unique se situe à mi-distance entre le plan médian **700** et la paroi d'extrémité (48,50) de l'alvéole, il suffit de choisir, en notant **L** la distance entre le médian **700** et la paroi **d'extrémité (48, 50)** de l'alvéole :

$$sin \ \alpha_1 = sin \ \alpha_2 = \frac{L}{2R}$$

Chaque paroi latérale **46** d'alvéole comporte une gorge **46.3** située entre les deux facettes de guidage **46.1, 46.2,** en retrait par rapport aux deux facettes de guidage **46.1, 46.2,** sensiblement dans le plan médian **700** de l'alvéole associée **34.**

La cage **22** ainsi définie, selon le premier ou le deuxième mode de réalisation, peut être fabriquée à partir d'une rondelle métallique par différentes opérations incluant un perçage de l'intérieur de la cage, un usinage des faces transversales, du profil extérieur et du profil intérieur puis un usinage des alvéoles par fraisage ou brochage, à l'aide d'un outil pénétrant dans chaque l'alvéole **34** suivant une direction perpendiculaire au plan de référence **600** de l'alvéole concernée. Les portées cylindriques **35, 38** font l'objet d'une rectification. Les pointes **42.3** présentes sur la face radiale extérieure **42** à hauteur de la rupture de pente entre les portions **42.1, 42.2** sont écrasées à l'aide d'une molette plate, ce qui a pour effet d'évaser très localement la matière vers les alvéoles adjacentes, sans modifier la forme des facettes de guidage **46.1, 46.2.** Des opérations de traitement thermique peuvent être prévues entre les opérations d'usinage. Le matériau métallique de la cage peut notamment être un acier ou un bronze massif, et, le cas échéant, argenté.

Le roulement à rotule est assemblé de façon conventionnelle, en montant les cages **22** sur la bague intérieure **16,** puis en insérant les rouleaux **20,** à l'exception de trois par rangée, ce qui permet d'insérer le sous-ensemble ainsi obtenu dans la bague extérieure **12,** puis d'insérer les derniers rouleaux **20** après rotation partielle du sous-ensemble dans la bague extérieure.

Naturellement, les exemples représentés sur les figures et discutés ci-dessus ne sont donnés qu'à titre illustratif et non limitatif. On peut par exemple prévoir deux bagues intérieures coaxiales, chacune avec un chemin de roulement. On peut également ne prévoir qu'un anneau d'extrémité **18,** la cage **22** étant alors une cage peigne.

Il est explicitement prévu que l'on puisse combiner entre eux les différents modes de réalisation illustrés pour en proposer d'autres.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, dans le cadre de l'invention définie par les revendications ci-jointes.

## Revendications

1. Procédé de fabrication d'une cage (22) monobloc massive en matériau métallique pour un roulement à rotule (10) à partir d'une pièce d'ébauche annulaire définissant un axe de révolution (400), selon lequel :

   - on obtient une pièce semi-finie par usinage de la pièce d'ébauche à l'aide d'au moins un outil d'usinage, de manière à former dans la pièce semi-finie des alvéoles séparées deux à deux par des entretoises (32) distribuées à distance les unes des autres à la périphérie d'un anneau d'extrémité (28, 30) de la pièce semi-finie et s'étendant chacune depuis l'anneau d'extrémité (28, 30) dans une direction contenue dans un plan axial, chaque alvéole (34) étant symétrique par rapport à un plan de symétrie (500) de l'alvéole, contenant l'axe de révolution (400), chacune des entretoises (32) comportant deux parois latérales d'alvéole (46) opposées, chacune des parois latérales d'alvéole (46) étant associée à l'une des alvéoles (34) et étant constituée par une surface réglée ayant en tout point une génératrice droite parallèle à une direction de pénétration de l'outil d'usinage et perpendiculaire à un plan de référence (600) de l'alvéole associée (34), le plan de référence (600) étant perpendiculaire au plan de symétrie (500) de l'alvéole associée (34), et faisant un angle prédéterminé (θ) avec l'axe de révolution de la cage, chacune des parois latérales d'alvéole (46) comportant deux facettes de guidage (46.1, 46.2) planes ou concaves s'étendant l'une d'un côté d'un plan médian (700) de l'alvéole associée et l'autre d'un côté opposé du plan médian (700) de l'alvéole, le plan médian (700) étant perpendiculaire au plan de symétrie (500) de l'alvéole (34) associée et au plan de référence (600) de l'alvéole (34) associée, chacune des entretoises (32) de la pièce semi finie comportant une face radiale extérieure (42) tournée radialement à l'opposé de l'axe de révolution (400) de la cage (22), puis
   - on procède à une finition de la cage à partir de la pièce semi-finie, incluant la formation sur chaque entretoise de languettes en saillie vers les alvéoles adjacentes et une rectification des facettes de guidage (46.1, 46.2) ;
   **caractérisée en ce que**
   - chaque paroi latérale d'alvéole (46) de la pièce semi-finie comporte une gorge (46.3) située entre les deux facettes de guidage (46.1, 46.2), en retrait par rapport aux deux facettes de guidage (46.1, 46.2), les deux facettes de guidage (46.1, 46.2) de chaque paroi latérale d'alvéole (46) après finition de la cage étant conformées de façon qu'il existe au moins un cercle positionné dans un plan de coupe (A-A, B-B) parallèle au plan de référence (600) de l'alvéole (34) associée qui est tangent simultanément en un point unique avec chacune des deux facettes de guidage (46.1, 46.2) de la paroi latérale d'alvéole (46), le rayon du cercle étant inférieur au rayon de courbure mesuré en tout point de chacune des deux facettes de guidage (46.1, 46.2) dans le plan de coupe (A-A, B-B).

2.  Procédé de fabrication d'une cage monobloc massive (22) selon la revendication 1, **caractérisée en ce que** pour former les languettes, on déforme localement la face radiale extérieure (42) de chaque entretoise.

3.  Procédé de fabrication d'une cage monobloc massive (22) selon l'une quelconque des revendications précédentes, **caractérisée en ce que** l'usinage de la pièce d'ébauche à l'aide d'au moins un outil d'usinage comporte au moins un fraisage à l'aide d'une fraise.

4.  Procédé de fabrication d'une cage monobloc massive (22) selon l'une quelconque des revendications précédentes, **caractérisée en ce que** pour chaque paroi latérale d'alvéole (46), les deux facettes de guidage (46.1, 46.2) sont symétriques l'une de l'autre par rapport au plan médian (700) de l'alvéole associée (34).

5.  Procédé de fabrication d'une cage monobloc massive (22) selon l'une quelconque des revendications précédentes, **caractérisée en ce que** chaque alvéole (34) comporte une paroi d'extrémité (48, 50) formée par une face de l'anneau (28, 30), qui est une surface réglée ayant en tout point une génératrice droite perpendiculaire au plan de référence (600) de l'alvéole (34).

6.  Procédé de fabrication d'une cage monobloc massive (22) selon l'une quelconque des revendications précédentes, **caractérisée en ce que** chacune des facettes de guidage (46.1, 46.2) s'étend, dans une direction parallèle au plan de symétrie (500) de l'alvéole associée (34) et au plan de référence (600) de l'alvéole associée (34), sur une distance supérieure à 40% de la distance entre l'anneau (28, 30) et le plan médian (700) de l'alvéole associée (34).

7.  Procédé de fabrication d'une cage monobloc massive (22) selon l'une quelconque des revendications précédentes, **caractérisée en ce que** les entretoises (32) ont une épaisseur radiale, mesurée dans un plan perpendiculaire à l'axe de révolution de la cage (22), qui varie en fonction de la distance à l'anneau (28, 30), en passant au moins par un minimum et un maximum supérieur à 1,2 fois, et de préférence à 1,5 fois le minimum.

8.  Procédé de fabrication d'une cage monobloc massive selon l'une quelconque des revendications précédentes, **caractérisée en ce que** chacune des entretoises (32) présente un plan de symétrie d'entretoise contenant l'axe de révolution (400) de la cage (22), et a une épaisseur, mesurée dans une direction perpendiculaire au plan de symétrie d'entretoise, qui varie en fonction de la distance à l'anneau (28, 30) et de la distance à l'axe de révolution (400) de la cage (22), en passant par un minimum dans une zone médiane contenant l'intersection entre le plan de symétrie d'entretoise et le plan médian (700) de chacune des alvéoles (34) adjacentes à l'entretoise (32).

9.  Procédé de fabrication d'une cage monobloc massive (22) selon l'une quelconque des revendications précédentes, **caractérisée en ce que** la face radiale extérieure (42) de chacune des entretoises (32) comporte une première portion (42.1) tangente à une portion cylindrique d'une enveloppe géométrique extérieure de la cage (22) et une deuxième portion (42.2) tangente à une portion conique de l'enveloppe géométrique extérieure de la cage (22), l'enveloppe géométrique extérieure de la cage (22) étant une surface de révolution autour de l'axe de révolution (400) de la cage (22),

10. Procédé de fabrication d'une cage monobloc massive (22) selon la revendication 9, **caractérisée en ce que** l'une au moins des deux conditions suivantes est remplie :

    - la première portion (42.1) a une dimension axiale mesurée parallèlement à l'axe de révolution (400) de la cage supérieure à un tiers de la dimension axiale des entretoises (32) mesurée parallèlement à l'axe de révolution (400) de la cage (22), et/ou
    - la deuxième portion a de préférence une dimension axiale mesurée parallèlement à l'axe de révolution (400) de la cage (22) supérieure à un tiers de la dimension axiale des entretoises (32) mesurée parallèlement à l'axe de révolution (400) de la cage (22).

11. Procédé de fabrication d'une cage monobloc massive (22) selon l'une quelconque des revendications précédentes, **caractérisée en ce que** chacune des entretoises (32) comporte une face radiale intérieure (44) tournée radialement vers l'axe de révolution (400) de la cage (22), et tangente à une portion conique d'une enveloppe géométrique intérieure de la cage (22), l'enveloppe géométrique intérieure de la cage (22) étant une surface de révolution autour de l'axe de révolution (400) de la cage (22), la face radiale intérieure (44) ayant une dimension axiale mesurée parallèlement à l'axe de révolution (400) de la cage (22) supérieure à deux tiers, et de préférence supérieure à quatre cinquième de la dimension axiale des entretoises (32) mesurée parallèlement à l'axe de révolution (400) de la cage (22).

12. Procédé de fabrication d'une cage monobloc massive (22) selon l'une quelconque des revendications précédentes, **caractérisée en ce que** l'anneau (28, 30) présente une portée cylindrique (35, 38) tournée radialement vers l'intérieur, faisant de préférence l'objet d'une rectification, de préférence durant la finition de la cage à partir de la pièce semi-finie.

13. Procédé de fabrication d'une cage monobloc massive (22) selon l'une quelconque des revendications précédentes, **caractérisée en ce que** le point unique est positionné à une distance du plan médian (700) de l'alvéole qui est comprise entre 30% et 70% de la distance L entre le plan médian (700) de l'alvéole (34) et l'anneau (28, 30).

14. Procédé de fabrication d'une cage monobloc massive (22) selon l'une quelconque des revendications précédentes, **caractérisée en ce que** la cage (22) comporte un anneau supplémentaire (30, 28), les entretoises (32) constituant des pontets s'étendant de l'anneau (28, 30) à l'anneau supplémentaire (30, 28), l'anneau (28, 30) et l'anneau supplémentaire (30, 28) ayant des diamètres extérieurs différents, chaque alvéole (34) comportant une paroi transversale supplémentaire (50, 48) formée par une face de l'anneau supplémentaire (30, 28), qui est une surface réglée ayant en tout point une génératrice droite perpendiculaire au plan de référence (600) de l'alvéole (34).

15. Procédé de fabrication d'une cage monobloc massive selon la revendication 14, **caractérisée en ce que** l'anneau supplémentaire (30, 28) présente une portée cylindrique supplémentaire (38, 35) tournée radialement vers l'intérieur.

16. Procédé de fabrication d'une cage monobloc massive (34) selon l'une quelconque des revendications 1 à 15, **caractérisée en ce que** chacune des facettes de guidage (46 .1, 46.2) est plane.

17. Procédé de fabrication d'une cage monobloc massive (34) selon l'une quelconque des revendications 1 à 15, **caractérisée en ce que** chaque facette de guidage (46.1, 46.2) de chaque alvéole (34) présente, dans le plan de référence de l'alvéole, une directrice en arc de cercle ayant un centre de courbure

$(O_1, O_2)$ positionné d'un côté du plan médian (700) de l'alvéole (34) opposé à la facette de guidage (46 .1, 46.2).

18. Cage fabriquée par le procédé selon l'une quelconque des revendications précédentes.

19. Roulement à rotule (10) comportant une bague extérieure (12) formant un chemin de roulement sphérique concave (14), au moins une bague intérieure (16) formant au moins un chemin de roulement intérieur (18) qui, dans une position de référence du roulement à rotule (10), est situé en regard du chemin de roulement sphérique concave (14) de la bague extérieure (12), des rouleaux (20) aptes à rouler sur le chemin de roulement sphérique concave (14) de la bague extérieure (12) et le chemin de roulement intérieur (18) de la bague intérieure (16), et présentant une surface extérieure de roulement (24) constituée par une surface de révolution générée par la rotation d'une méridienne en arc de cercle autour d'un axe de symétrie de révolution (200) situé entre la méridienne en arc de cercle et le centre de courbure de la méridienne en arc de cercle, **caractérisé en ce qu'**il comporte au moins une cage monobloc massive (22) selon la revendication 18, chaque alvéole (34) logeant un rouleau (20) parmi les rouleaux, chaque facette de guidage (46.1, 46.2) ayant en tout point un rayon de courbure supérieur au rayon de courbure de la méridienne en arc de cercle dudit rouleau (20).

## Patentansprüche

1. Verfahren zum Herstellen eines massiven einstückigen Käfigs (22) aus metallischem Material für ein Pendelrollenlager (10) aus einem ringförmigen Rohling, der eine Rotationsachse (400) definiert, wobei:

    - ein Halbfertigteil erhalten wird, indem der Rohling mit mindestens einem Bearbeitungswerkzeug bearbeitet wird, um im Halbfertigteil Zellen zu bilden, die jeweils paarweise durch Abstandshalter (32), die auf dem Umfang eines Endrings (28, 30) des Halbfertigteils voneinander beabstandet verteilt sind, getrennt sind und die sich jeweils vom Endring (28, 30) in einer in einer axialen Ebene enthaltenen Richtung erstrecken, wobei jede Zelle (34) symmetrisch zu einer Symmetrieebene (500) der Zelle ist, die die Rotationsachse (400) enthält, wobei jeder der Abstandshalter (32) zwei gegenüberliegende Zellseitenwände (46) aufweist, wobei jede der Zellseitenwände (46) einer der Zellen (34) zugeordnet ist und aus einer Regelfläche besteht, die an allen Punkten eine gerade Mantellinie aufweist, die parallel zu einer Eindringungsrichtung des Bearbeitungswerkzeugs und senkrecht zu einer Bezugsebene (600) der zugeordneten Zelle (34) ist, wobei die Bezugsebene (600) senkrecht zur Symmetrieebene (500) der zugeordneten Zelle (34) ist und einen vorbestimmten Winkel (θ) mit der Rotationsachse des Käfigs bildet, wobei jede der Zellseitenwände (46) zwei plane oder konkave Führungsfacetten (46.1, 46.2) aufweist, wobei eine sich auf einer Seite einer Mittelebene (700) der zugeordneten Zelle und die andere auf einer gegenüberliegenden Seite der Mittelebene (700) der Zelle erstreckt, wobei die Mittelebene (700) senkrecht zur Symmetrieebene (500) der zugeordneten Zelle (34) und zur Bezugsebene (600) der zugeordneten Zelle (34) ist, wobei jeder der Abstandshalter (32) des Halbfertigteils eine äußere radiale Fläche (42) aufweist, die radial zur Gegenseite der Rotationsachse (400) des Käfigs (22) gedreht ist, dann

- wird der Käfig aus dem Halbfertigteil fertiggestellt, umfassend eine Bildung von Laschen auf jedem Abstandshalter, die in Richtung der benachbarten Zellen vorstehen, und eine Begradigung der Führungsfacetten (46.1, 46.2); **dadurch gekennzeichnet, dass**

- jede Seitenwand der Zelle (46) des Halbfertigteils eine Nut (46.3) aufweist, die zwischen den beiden Führungsfacetten (46.1, 46.2) und relativ zu den beiden Führungsfacetten (46.1, 46.2) zurückgesetzt angeordnet ist, wobei die beiden Führungsfacetten (46.1, 46.2) jeder Seitenwand der Zelle (46) nach Fertigstellung des Käfigs so ausgeformt sind, dass es mindestens einen Kreis in einer Schnittebene (A-A, B-B) parallel zur Bezugsebene (600) der zugeordneten Zelle (34) gibt, der gleichzeitig an einem einzelnen Punkt jede der beiden Führungsfacetten (46.1, 46.2) der Seitenwand der Zelle (46) tangiert, wobei der Radius des Kreises kleiner ist als der Krümmungsradius, der an allen Punkten jeder der beiden Führungsfacetten (46.1, 46.2) in der Schnittebene (A-A, B-B) gemessen wurde.

2. Verfahren zum Herstellen eines massiven einstückigen Käfigs (22) nach Anspruch 1, **dadurch gekennzeichnet, dass** zur Bildung der Laschen die äußere radiale Fläche (42) jedes Abstandshalters lokal verformt wird.

3. Verfahren zum Herstellen eines massiven einstückigen Käfigs (22) nach einem der vorhergehenden Ansprüche, **dadurch gekennzeichnet, dass** die Bearbeitung des Rohlings unter Verwendung mindestens eines Bearbeitungswerkzeugs mindestens eine Einfräsung unter Verwendung einer Fräse aufweist.

4. Verfahren zum Herstellen eines massiven einstückigen Käfigs (22) nach einem der vorhergehenden Ansprüche, **dadurch gekennzeichnet, dass** für jede Seitenwand der Zelle (46) die beiden Führungsfacetten (46.1, 46.2) in Bezug auf die Mittelebene (700) der zugeordneten Zelle (34) symmetrisch zueinander sind.

5. Verfahren zum Herstellen eines massiven einstückigen Käfigs (22) nach einem der vorhergehenden Ansprüche, **dadurch gekennzeichnet, dass** jede Zelle (34) eine Endwand (48, 50) aufweist, die durch eine Fläche des Rings (28, 30) gebildet wird, die eine Regelfläche ist, die an allen Punkten eine gerade Mantellinie senkrecht zur Bezugsebene (600) der Zelle (34) aufweist.

6. Verfahren zum Herstellen eines massiven einstückigen Käfigs (22) nach einem der vorhergehenden Ansprüche, **dadurch gekennzeichnet, dass** sich jede der Führungsfacetten (46.1, 46.2) in einer Richtung parallel zur Symmetrieebene (500) der zugehörigen Zelle (34) und zur Bezugsebene (600) der zugehörigen Zelle (34) über eine Entfernung von mehr als 40% der Entfernung zwischen dem Ring (28, 30) und der Mittelebene (700) der zugehörigen Zelle (34) erstreckt.

7. Verfahren zum Herstellen eines massiven einstückigen Käfigs (22) nach einem der vorhergehenden Ansprüche, **dadurch gekennzeichnet, dass** die Abstandshalter (32) eine radiale Dicke aufweisen, die in einer Ebene senkrecht zur Rotationsachse des Käfigs (22) gemessen wird, die in Abhängigkeit von der Entfernung zum Ring (28, 30) variiert und dabei zwischen mindestens eiemn Mindestmaß und einem Höchstmaß, das größer als das 1,2-fache und vorzugsweise das 1,5-fache des Mindestmaßes ist.

8. Verfahren zum Herstellen eines massiven einstückigen Käfigs nach einem der vorhergehenden Ansprüche, **dadurch gekennzeichnet, dass** jeder der Abstandshalter (32) eine Abstandshaltersymmetrieebene aufweist, die die Rotationsachse (400) des Käfigs (22) enthält, und eine Dicke aufweist, die in einer Richtung senkrecht zur Abstandshaltersymmetrieebene gemessen wird, die in Abhängigkeit von der Entfernung zum Ring (28, 30) und von der Entfernung zur Rotationsachse (400) des Käfigs (22) variiert, und dabei ein Mindestmaß in einem Mittelbereich durchläuft, der den Schnittpunkt zwischen der Abstandshaltersymmetrieebene und der Mittelebene (700) jeder der dem Abstandshalter (32) benachbarten Zellen (34) beinhaltet.

9. Verfahren zum Herstellen eines massiven einstückigen Käfigs (22) nach einem der vorhergehenden Ansprüche, **dadurch gekennzeichnet, dass** die äußere radiale Fläche (42) jedes der Abstandshalter (32) einen ersten Abschnitt (42.1) aufweist, der einen zylindrischen Abschnitt einer äußeren geometrischen Hülle des Käfigs (22) tangiert, und einen zweiten Abschnitt (42.2), der einen konischen Abschnitt der äußeren geometrischen Hülle des Käfigs (22) tangiert, wobei die äußere geometrische Hülle des Käfigs (22) eine Rotationsoberfläche um die Rotationsachse (400) des Käfigs (22) herum ist.

10. Verfahren zum Herstellen eines massiven einstückigen Käfigs (22) nach Anspruch 9, **dadurch gekennzeichnet, dass** mindestens eine der folgenden beiden Bedingungen erfüllt wird:

- der erste Abschnitt (42.1) weist eine axiale Abmessung auf, die parallel zur Rotationsachse (400) des Käfigs gemessen wird, die größer als ein Drittel der axialen Abmessung der Abstandshalter (32) ist, die parallel zur Rotationsachse (400) des Käfigs gemessen wird (22), und/oder
- der zweite Abschnitt weist vorzugsweise eine axiale Abmessung auf, die parallel zur Rotationsachse (400) des Käfigs (22) gemessen wird, die größer als ein Drittel der axialen Abmessung der Abstandshalter (32) ist, die parallel zur Rotationsachse (400) des Käfigs (22) gemessen wird.

11. Verfahren zum Herstellen eines massiven einstückigen Käfigs (22) nach einem der vorhergehenden Ansprüche, **dadurch gekennzeichnet, dass** jeder der Abstandshalter (32) eine innere radiale Fläche (44) aufweist, die radial zur Rotationsachse (400) des Käfigs (22) gedreht ist und einen konischen Abschnitt einer inneren geometrischen Hülle des Käfigs (22) tangiert, wobei die innere geometrische Hülle des Käfigs (22) eine Rotationsoberfläche um die Rotationsachse (400) des Käfigs (22) ist, wobei die innere radiale Fläche (44) eine axiale Abmessung aufweist, die parallel zur Rotationsachse (400) des Käfigs (22) gemessen wird, die größer als zwei Drittel und vorzugsweise größer als vier Fünftel der axialen Abmessung der Abstandshalter (32), die parallel zur Rotationsachse (400) des Käfigs (22) gemessen wird, ist.

12. Verfahren zum Herstellen eines massiven einstückigen Käfigs nach einem der vorhergehenden Ansprüche, **dadurch gekennzeichnet, dass** der Ring (28, 30) eine zylindrische Auflagefläche (35, 38) aufweist, die radial nach innen gedreht ist und vorzugsweise einer Berichtigung unterzogen wird, vorzugsweise während der Endbearbeitung des Käfigs aus dem Halbfertigteil.

13. Verfahren zum Herstellen eines massiven einstückigen Käfigs (22) nach einem der vorhergehenden Ansprüche, **dadurch gekennzeichnet, dass** der einzelne Punkt in einer Entfernung von der Mittelebene (700) der Zelle positioniert ist, die zwischen 30% und 70% der Entfernung L zwischen der Mittelebene (700) der Zelle (34) und dem Ring (28, 30) liegt.

14. Verfahren zum Herstellen eines massiven einstückigen Käfigs (22) nach einem der vorhergehenden Ansprüche, **dadurch gekennzeichnet, dass** der Käfig (22) einen Zusatzring (30, 28) aufweist, wobei die Abstandshalter (32) Brücken bilden, die sich vom Ring (28, 30) zum Zusatzring (30, 28) erstrecken, wobei der Ring (28, 30) und der Zusatzring (30, 28) unterschiedliche Außendurchmesser aufweisen, wobei jede Zelle (34) eine zusätzliche Querwand (50, 48) aufweist, die durch eine Fläche des Zusatzrings (30, 28) gebildet wird, die eine Regelfläche ist, die an allen Punkten eine gerade Mantellinie aufweist, die senkrecht zur Bezugsebene (600) der Zelle (34) ist.

15. Verfahren zum Herstellen eines massiven einstückigen Käfigs nach Anspruch 14, **dadurch gekennzeichnet, dass** der Zusatzring (30, 28) eine zusätzliche zylindrische Auflagefläche (38, 35) aufweist, die radial nach innen gedreht ist.

16. Verfahren zum Herstellen eines massiven einstückigen Käfigs (34) nach einem der vorhergehenden Ansprüche 1 bis 15, **dadurch gekennzeichnet, dass** jede der Führungsfacetten (46.1, 46.2) plan ist.

17. Verfahren zum Herstellen eines massiven einstückigen Käfigs (34) nach einem der vorhergehenden Ansprüche 1 bis 15, **dadurch gekennzeichnet, dass** jede Führungsfacette (46.1, 46.2) jeder Zelle (34) in der Bezugsebene der Zelle eine Leitlinie in einem Kreisbogen mit einem Krümmungsmittelpunkt ($O_1$, $O_2$) aufweist, der auf einer Seite der Mittelebene (700) der Zelle (34) gegenüber der Führungsfacette (46.1, 46.2) positioniert ist.

18. Käfig, der nach dem Verfahren eines der vorhergehenden Ansprüche hergestellt wurde.

19. Pendelrollenlager (10), aufweisend einen Außenring (12), der eine konkave kugelförmige Laufbahn (14) bildet, mindestens einen Innenring (16), der mindestens eine innere Laufbahn (18) bildet, die sich, in einer Bezugsposition des Pendelrollenlagers (10), der konkaven kugelförmigen Laufbahn (14) des Außenrings (12) zugewandt angeordnet ist, Rollen (20), die auf der konkaven kugelförmigen Laufbahn (14) des Außenringes (12) und der inneren Laufbahn (18) des Innenrings (16) laufen können, und die eine äußere Laufoberfläche (24) aufweisen, die durch eine Rotationsoberfläche gebildet wird, die durch die Rotation eines Meridians in einem Kreisbogen um eine Rotationssymmetrieachse (200) erzeugt wird, die sich zwischen dem Meridian in einem Kreisbogen und dem Krümmungsmittelpunkt des Meridians in einem Kreisbogen angeordnet ist, **dadurch gekennzeichnet, dass** es mindestens einen massiven einstückigen Käfig (22) nach Anspruch 18 aufweist, wobei jede Zelle (34) eine Rolle (20) unter den Rollen aufnimmt, wobei jede Führungsfacette (46.1, 46.2) an allen Punkten einen Krümmungsradius aufweist, der größer als der Krümmungsradius des Meridians im Kreisbogen der Rolle (20) ist.

**Claims**

1. Method for producing a solid one-piece cage (22) made of metal material for a spherical roller bearing (10) from an annular blank part defining an axis of revolution (400), wherein:

   - a semi-finished part is obtained by machining the blank part using at least one machining tool, so as to form cells in the semi-finished part which are separated in pairs by spacers (32) which are distributed at a distance from one another around the periphery of an end ring (28, 30) of the semi-finished part and which each extend from the end ring (28, 30) in a direction contained in an axial plane, each cell (34) being symmetrical with respect to a plane of symmetry (500) of the cell, containing the axis of revolution (400), each of the spacers (32) comprising two opposite cell side walls (46), each of the cell side walls (46) being associated with one of the cells (34) and being formed by a ruled surface having, at any point, a straight generatrix parallel to a direction of penetration of the machining tool and perpendicular to a reference plane (600) of the associated cell (34), the reference plane (600) being perpendicular to the plane of symmetry (500) of the associated cell (34) and forming a predetermined angle (θ) with the axis of revolution of the cage, each of the cell side walls (46) comprising two planar or concave guide facets (46.1, 46.2) extending one on one side of a median plane (700) of the associated cell and the other on an opposite side of the median plane (700) of the cell, the median plane (700) being perpendicular to the plane of symmetry (500) of the associated cell (34) and to the reference plane (600) of the associated cell (34), each of the spacers (32) of the semi-finished part comprising an outer radial face (42) facing radially away from the axis of revolution (400) of the cage (22), then
   - the cage is finished from the semi-finished part, including the formation on each spacer of tongues projecting toward the adjacent cells and grinding of the guide facets (46.1, 46.2);

**characterized in that**
   - each cell side wall (46) of the semi-finished part comprises a groove (46.3) which is located between the two guide facets (46.1, 46.2) and is set back relative to the two guide facets (46.1, 46.2), the two guide facets (46.1, 46.2) of each cell side wall (46), after finishing the cage, being shaped such that there is at least one circle which is positioned in a section plane (A-A, B-B) parallel to the reference plane (600) of the associated cell (34) and is simultaneously tangent at a single point with each of the two guide facets (46.1, 46.2) of the cell side wall (46), the radius of the circle being less than the radius of curvature measured at any point on each of the two guide facets (46.1, 46.2) in the section plane (A-A, B-B).

2. Method for producing a solid one-piece cage (22) according to claim 1, **characterized in that** in order to form the tongues, the outer radial face (42) of each spacer is locally deformed.

3. Method for producing a solid one-piece cage (22) according to either of the preceding claims, **characterized in that** the machining of the blank part using at least one machining tool comprises at least milling using a milling cutter.

4. Method for producing a solid one-piece cage (22) according to any of the preceding claims, **characterized in that**, for each cell side wall (46), the two guide facets (46.1, 46.2) are symmetrical to one another with respect to the median plane (700) of the associated cell (34).

5. Method for producing a solid one-piece cage (22) according to any of the preceding claims, **characterized in that** each cell (34) comprises an end wall (48, 50) formed by a face of the ring (28, 30), which is a ruled surface having, at any point, a straight generatrix perpendicular to the reference plane (600) of the cell (34).

6. Method for producing a solid one-piece cage (22) according to any of the preceding claims, **characterized in that** each of the guide facets (46.1, 46.2) extends, in a direction parallel to the plane of symmetry (500) of the associated cell (34) and to the reference plane (600) of the associated cell (34), over a distance greater than 40% of the distance between the ring (28, 30) and the median plane (700) of the associated cell (34).

7. Method for producing a solid one-piece cage (22) according to any of the preceding claims, **characterized in that** the spacers (32) have a radial thickness, measured in a plane perpendicular to the axis of revolution of the cage (22), which varies according to the distance from the ring (28, 30), passing at least through a minimum and a maximum that is greater than 1.2 times, and preferably 1.5 times, the minimum.

8. Method for producing a solid one-piece cage according to any of the preceding claims, **characterized in that** each of the spacers (32) has a spacer plane of symmetry containing the axis of revolution (400) of the cage (22), and has a thickness, measured in a direction perpendicular to the spacer plane of symmetry, which varies according to the distance from the ring (28, 30) and the distance from the axis of revolution (400) of the cage (22), passing through a minimum in a median zone containing the intersection between the spacer plane of symmetry and the median plane (700) of each of the cells (34) adjacent to the spacer (32).

9. Method for producing a solid one-piece cage (22) according to any of the preceding claims, **characterized in that** the outer radial face (42) of each of the spacers (32) comprises a first portion (42.1) tangent to a cylindrical portion of an outer geometric envelope of the cage (22) and a second portion (42.2) tangent to a conical portion of the outer geometric envelope of the cage (22), the outer geometric envelope of the cage (22) being a surface of revolution about the axis of revolution (400) of the cage (22).

10. Method for producing a solid one-piece cage (22) according to claim 9, **characterized in that** at least one of the following two conditions is fulfilled:

    - the first portion (42.1) has an axial dimension which is measured in parallel with the axis of revolution (400) of the cage and is greater than one third of the axial dimension of the spacers (32) which is measured in parallel with the axis of revolution (400) of the cage (22), and/or
    - the second portion preferably has an axial dimension which is measured in parallel with the axis of revolution (400) of the cage (22) and is greater than one third of the axial dimension of the spacers (32) which is measured in parallel with the axis of revolution (400) of the cage (22).

11. Method for producing a solid one-piece cage (22) according to any of the preceding claims, **characterized in that** each of the spacers (32) has an inner radial face (44) facing radially toward the axis of revolution (400) of the cage (22), and tangent to a conical portion of an inner geometric envelope of the cage (22), the inner geometric envelope of the cage (22) being a surface of revolution about the axis of revolution (400) of the cage (22), the inner radial face (44) having an axial dimension which is measured in parallel with the axis of revolution (400) of the cage (22) and is greater than two thirds, and preferably greater than four fifths, of the axial dimension of the spacers (32) which is measured in parallel with the axis of revolution (400) of the cage (22).

12. Method for producing a solid one-piece cage (22) according to any of the preceding claims, **characterized in that** the ring (28, 30) has a cylindrical bearing surface (35, 38) which faces radially inward and is preferably ground, preferably during the finishing of the cage from the semi-finished part.

13. Method for producing a solid one-piece cage (22) according to any of the preceding claims, **characterized in that** the single point is positioned at a distance from the median plane (700) of the cell which is between 30% and 70% of the distance L between the median plane (700) of the cell (34) and the ring (28, 30).

14. Method for producing a solid one-piece cage (22) according to any of the preceding claims, **characterized in that** the cage (22) comprises an additional ring (30, 28), the spacers (32) forming bridges extending from the ring (28, 30) to the additional ring (30, 28), the ring (28, 30) and the additional ring (30, 28) having different outer diameters, each cell (34) comprising an additional transverse wall (50, 48) formed by a face of the additional ring (30, 28), which is a ruled surface having, at any point, a straight generatrix perpendicular to the reference plane (600) of the cell (34).

15. Method for producing a solid one-piece cage according to claim 14, **characterized in that** the additional ring (30, 28) has an additional cylindrical bearing surface (38, 35) facing radially inward.

16. Method for producing a solid one-piece cage (34) according to any of claims 1 to 15, **characterized in that** each of the guide facets (46.1, 46.2) is planar.

17. Method for producing a solid one-piece cage (34) according to any of claims 1 to 15, **characterized in that** each guide facet (46.1, 46.2) of each cell (34) has, in the reference plane of the cell, an arcuate director having a center of curvature $(O_1, O_2)$ positioned on one side of the median plane (700) of the cell (34) opposite to the guide facet (46.1, 46.2).

18. Cage produced using the method according to any of the preceding claims.

19. Spherical roller bearing (10) comprising an outer race (12) forming a concave spherical raceway (14), at least one inner race (16) forming at least one inner raceway (18) which, in a reference position of the spherical roller bearing (10), is located opposite the concave spherical raceway (14) of the outer race (12), rollers (20) which can roll on the concave spherical raceway (14) of the outer race (12) and the inner raceway (18) of the inner race (16), and having an outer rolling surface (24) formed by a surface of revolution generated by the rotation of an arcuate meridian about an axis of symmetry of revolution (200) located between the arcuate meridian and the center of curvature of the arcuate meridian, **characterized in that** it comprises at least one solid one-piece cage (22) according to claim 18, each cell (34) accommodating one roller (20) from the rollers, each guide facet (46.1, 46.2) having, at any point, a radius of curvature greater than the radius of curvature of the arcuate meridian of said roller (20).

Fig. 1

Fig. 2

42.3

48

42 { 42.2
      42.3
      42.1

32

44

34

38

46 { 46.1
      46.3
      46.2

32

22

35

28

30

46 { 46.1
      46.3
      46.2

# Fig. 3

B  A

A  B

600

θ

24

28

30

20

32

# Fig. 4

## Fig. 5

Fig. 6

Fig. 7

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 1562660 A